# EUROPEAN PATENT SPECIFICATION

(11) **EP 3 194 536 B1**
(45) Date of publication and mention of the grant of the patent: **20.04.2022**
(21) Application number: 15841547.1
(22) Date of filing: 15.09.2015
(51) Int. Cl.: C10L 9/08, C10L 5/44, C10L 5/04, C10L 5/40, C10B 53/02, C10B 57/02, C10B 57/08, C10B 57/10, C10K 1/32

(54) **METHOD FOR THERMAL TREATMENT OF RAW MATERIALS COMPRISING LIGNOCELLULOSE**
VERFAHREN ZUR THERMISCHEN BEHANDLUNG VON ROHSTOFFEN MIT LIGNOCELLULOSE
PROCÉDÉ DE TRAITEMENT THERMIQUE DE MATIÈRES PREMIÈRES COMPRENANT LA LIGNOCELLULOSE

(30) Priority: 18.09.2014 SE 1451097
(43) Date of publication of application: 26.07.2017
(73) Proprietor: Åbyhammar Med Enskild Firma Scandry, Tomas, 16271 Vällingby (SE)
(72) Inventor: ÅBYHAMMAR, Tomas, 16271 Vällingby (SE)
(74) Representative: Noréns Patentbyrå AB
(86) International application number: PCT/SE2015/050967
(87) International publication number: WO 2016/043651

(56) References cited:
- EP-A1- 2 189 512
- EP-A2- 2 017 325
- EP-A2- 2 287 278
- WO-A1-2007/078199
- WO-A1-2007/078199
- WO-A1-2011/159244
- WO-A1-2014/060439
- SE-C2- 535 846
- US-B2- 7 942 942

## Description

The present invention relates to a method for thermal treatment of raw materials comprising lignocellulose, such as refinement of organic materials, essentially biomass such as wood parts, agricultural products, peat, brown coal, waste products, residues from fermentation processes, etc. Also more combined products such as sewage sludge, manure, etc. and residual products such as plastic material, rubber and petroleum residue are included. The intention by the invention is to refine the raw material into products that are better suited for distribution and easier to use than the raw material. Primarily it is the intention to produce energy products, but also recovery of smaller but more valuable components for other fields of application are encompassed. Sanitation or destruction of materials can also be important purposes for the invention. The invention constitutes a method to obtain the advantages that can be obtained by pyrolysis of the raw material with high energy efficiency and substantially without any harmful emissions. It also gives the possibility for a high yield of liquid and coal that are aimed to obtain a higher quality than by known methods. The invention provides for a method that is useful in smaller local plants close to the source of the raw material and where known methods require large-scale plants.

It is since long known that lignocellulose materials, e.g. wood, during heating produce gases, liquid and a remainder with high coal content. The liquid is usually called tar, and the remainder charcoal. The gases essentially comprise carbon monoxide and hydrocarbons and a substantial amount of carbon dioxide and water vapour, and thereby have a thermal value that is so low that the use of it is limited in time and place.

Wood has historically been refined into charcoal for providing fuel and reduction materials for a local production of metals. For the production of iron so called charcoal stacks were developed where the coal was produced in the forest to make benefit of an easier transportation over the raw wood material, but also for avoiding the troublesome gases formed during the process.

In the end of the nineteenth century more industrialized processes were introduced, primarily for increasing the yield of coal, and then often in connection to railways for facilitating transportation. The carbonization was carried out in carbonizing-furnaces where the raw material was indirectly heated and gases were evaporated from the remaining coal. The gas evaporated was essentially used as fuel for the process, but occasionally it was condensed. When the gas was condensed some useful products were formed together with a not condensable but burnable gas. All the liquid that was produced by these methods were distilled from the raw material or the remainder. The residual gas was used as fuel for the process. During the carbonization big amounts of water are formed, partly from the moisture content included in the raw material and partly water formed during the degradation of the wood. The condensed liquid is separated into two fractions. One of the fractions is insoluble in water and is usually called A-tar, and the other, being soluble in water, is usually called B-tar or pyrolytic acid.

The A-tar was used as surface protection material for wooden constructions or was burnt. During storing or at heating a certain amount of pitch is formed in the A-tar. The pitch is constituted of longer molecules that cannot be solved in the liquid, and was used as impregnating agent or sealing mass.

The B-tar, pyrolytic acid, was difficult to make use of being a fraction consisting of water and polar hydrocarbons such as organic acids, aldehydes and methanol (wood spirit). The B-tar therefore often was discharged and is now soil pollution on the site of the production. However, different systems to make use of the B-tar were also developed.

During the years 1860-1960 charcoal in metal production was, with only a few exceptions, replaced by pit coal, electricity or oil. Today is the use of renewable fuels again of interest.

During the two world wars big efforts were made to find alternative energy raw materials to imported fuels. From these efforts were found that the maximum mass return of coal from dry wood is about 30%, the return of liquid varies between 10 and 40%, whereas the return of gas can vary between 20 and 100%.

During slow heating to high temperature a big amount of coal is formed. The increased coal yield can be explained in that shorter molecules during heating are polymerized into longer molecules, especially in contact with coal that acts as a catalyst for the reaction. Substances that otherwise would have been distilled away are thereby maintained a longer time in the hot zone and to a great extent form coal and a smaller amount of gaseous substances. A corresponding phenomenon also occurs in the liquid in that hydrocarbons of low viscosity are transformed into viscous/solid substances, such as pitch.

The final temperature determines the quality of the coal. Already at 450°C the coal content is high enough for many fields of application, but even higher final temperatures give higher coal content and also other improved properties such as higher strength and larger internal surface available for adsorption.

Today there is focus on studying methods of pyrolysis where the raw material is subject to rapid heating to high temperature by partial combustion, often so that a total gasification is obtained. Thereafter the gas is chilled quickly whereby a big amount of the raw material is transformed into an organic liquid, often called bio-oil. The term "oil", however, is misleading, as the liquid is water soluble, which also restricts the use thereof. Bio-oil is though considered to have a big potential for future refinement to vehicle fuel, and many development projects are under way.

Characteristic data for different types of pyrolysis:

| | Time (s) | Final temp. (°C) |
|---|---|---|
| Traditional pyrolysis | >5 | <500 |
| Flash pyrolysis | <2 | 400-600 |
| Quick pyrolysis | <0.5 | >600 |

The possibilities to use peat as raw material for the energy, chemical products and foodstuff have also been studied. Within the field of peat a process called wet carbonization has been studied. This method includes that the raw material in very wet conditions is heated under pressure by means of direct vapour to a temperature in the interval of 200-260°C during a defined time. For peat the temperature of 242°C has been especially studied.

At this temperature level lignocellulose containing materials undergo several important changes. Primarily the hemicellulose is broken down. Also the lignin part is influenced, but the disintegration thereof occurs essentially at higher temperatures. The cellulose content is considered to be rather unaffected at those temperatures. Breakdown happens by so called decarboxylation and also in that hydroxyl groups are separated from the original compositions. The reactions result inter alia in that carbon oxides and water vapor evaporate into a gaseous state and in that the hydrophilic properties of the material are reduced which is of major interest when treating peat where dewatering always is in focus. The oxygen content in the remainder is also reduced which leads to an increase in the specific calorific value in comparison to the raw material. Further has been noted that organic acids are released during the treatment, and at the same time an amount of ammonia is formed.

A corresponding process traditionally has been used within the field of foodstuffs to influence the smell and taste of the product, namely called roasting. The possibilities of improving properties of wooden material by soft heat treatment were observed in connection with the two world wars. During the last decades it has been observed again, this time as a means of refinement of wood based fuels. Now the method is called torrefaction and is considered to be an important step to render the wood fuel chain more efficient due to the higher specific energy content of the product, better storing possibilities and better grindability and compressibility at the production of pellets. Further, the product is biologically inactive which means that problems with biologic degradation are avoided.

In connection to the oil crisis in the middle of the 1970-s societies high dependence on petroleum products and the possibilities to replacing these were observed, and again it became of interest to study plant materials, now named bio mass, as raw material for the energy sector. Thereafter different proposals for converting the natural raw material into uniform intermediate products suitable for further synthesis to the intended final products have been studied. These proposals have essentially consisted of different ways of gasifying the raw material into a unified gas proper for the so called Fischer-Tropsch synthesis to methanol and other coveted organic compounds. A drawback inherent in these methods is that they in contrast to their historic predecessors require very large-scale applications which have resulted in that very few of the alternatives studied have come into practice even though the development has been pursued during a long time. The principle of gasifying the raw material completely also leads to that a substantial amount of the energy of the raw material is released as thermal energy which is difficult to bring back to products that can be distributed. Thereby there is a need for so called ***combines*** where the heat released can be utilized in other ways, which further increases the difficulties to bringing the concepts into practice.

Recently there has been a concentration in development on quick pyrolysis. The goal here is to produce a so called bio oil or pyrolysis liquid. By quick heating of the raw material almost all raw material can become gasified. If this gasification is followed by quick cooling of the gas a mixture of organic liquefied substances can be extracted with high return. The drawback with this "oil" is, as mentioned above, that the content of oxygen is high which reduces its value as an energy product and makes the road up to a useful vehicle fuel long. Further, the need for utilizing a big amount of heat at the production site remains. However, it is likely that such installations can become economic even in smaller units than the earlier described systems where there is a continuous need of heat, such as e.g. in a process industry.

A further option to performing gasification and liquefaction of bio mass is the method where salts or oils with high boiling point are the heat transferring means with which the raw material is brought into contact, sometimes called solvolyse. Salts primarily have the function of transferring heat to the raw material during pyrolysis. Oils can also have the function of generating a carrier gas for driving off compounds with low vapor pressure being formed. Oil and finely divided raw material is supplied and the pyrolysis is allowed to continue as the oil is being distilled. The remainder after heating to defined temperature constitutes one of the products and the condensate the other. An important purpose of these solutions is to make it possible to work at atmospheric pressure. Another aim is based on the opposite, where the pyrolysis is performed at such a high pressure that the heat transferring means is transformed into its supercritical state. Both water and carbon dioxide provide good features as solvent at the supercritical state. That both these process means are "natural" has high attractive force but the problems when working at supercritical pressures and temperatures are of course considerable.

There is normally some confusion around the courses at torrefaction and carbonization. Regarding the torrefaction process it has not been possible to find any figures about the reaction heat, but it is considered to be mildly endothermic. At heating to higher temperature the carbonization reactions are initiated. These are according to many scientists highly exothermic. During this pyrolysis a temperature rise occurs and thereby a further degradation of the substance to a coal product and big amounts of gas. Simultaneously liquid is freed from the substance. The share of liquid will be highest at temperatures around 400°C to 500°C. At traditional pyrolysis by distillation part of the liquid remains in the kiln where it during continued heating is forming char and gases.

The carbonization reaction is said to be autothermal, i.e. when the reaction has been initiated it will go on automatically. A torrefaction occurs at temperatures between 200 and 300°C. Hemicellulose will be degraded to limited extent at temperatures below 250°C and at higher temperatures a strong gasification/carbonization will occur.

Carbonization is essentially initiated at temperatures of 260-280°C according to many studies. In that case torrefaction must be carried through at lower temperatures, so that the carbonization processes are not initiated. However, some scientists have indicated that torrefaction can be made in the interval 230-270°C or 200-300°C, which is contradictory as these circumstances would initiate the carbonization processes according to other scientists. Some of the studies that have been presented are very detailed.

No details have been found about the final temperature reached at autothermal pyrolysis of wood. It has also been noted that some scientists are very silent about initial moist content in the raw material, which of course reduces the value of detailed information about reaction processes, products, product exchanges and energy balances. On the other hand several scientists indicate that the pyrolysis process is hard to control, and that different raw materials give varying reactivity and yield of the products. Several scientists indicate that the actual raw material is of great significance for the progress of the process. Especially the part and character of hemicellulose is indicated to be of great significance.

One scientist has explained: "A higher hemicellulose content leads to higher torrefaction reactivity. In an operating window of 8 - 30 min reaction time and at 230 to 270°C."

Among plants, especially the composition and concentration of the hemicellulose differs between the deciduous/herbaceous species and the coniferous species. The hemicellulose of the deciduous and herbaceous species is mainly xylan-based, while for coniferous wood it is glucomannan-based. From xylan-based hemicellulose, it is known that it is more reactive than glucomannan-based hemicellulose. The difference in mass loss between the herbaceous and deciduous species may be explained by the larger concentration of hemicellulose present in the herbaceous species.

According to one scientist the conclusion is that the process has to be adapted to the variations of the raw material:"Consequently, each biomass will have its own set of operating conditions (recipe) to achieve the same product quality."

One of the basic challenges of the present invention is therefore to provide a good process design so that the influence of varying properties of the raw material etc. can be mastered due to good possibilities to registering and controlling the process.

During different processes of pyrolysis of ligneous plants, the following compounds are formed:
Drying up to approximately 170°C: No effect on the solid substance during shorter duration.

### Roasting at < approx. 250°C:

| | |
|---|---|
| Decomposing material: | hemicellulose etc., i.e. xylan |
| Gas: | H₂O, H₂, CO, CO₂, CH₄, C₂H₄, C₂H₆, organic acids, ammonia, ketones, furans, toluene, benzene, waxes |
| Liquid: | released liquid is absorbed in the material |

### Carbonisation at > approx. 250 °C:

| | |
|---|---|
| Decomposing material: | lignin C₉H₁₀O₃(OCH₃)_{0,9-1,7}, cellulose (C₆H₁₂O₆)ₙ |
| Gas: | H₂O, H₂, CO, CO₂, CH₄, aldehydes, alcohols, especially methanol, ketones, especially acetone, furans and waxes. |
| Liquid: | A-tar (hydrophobic): resin- and fatty acids and their conversion products such as resin oil, oxy acids and esters, higher fatty alcohols and terpene alcohols, stearin etc. B-tar (hydrophilic): possibly condensate from the gas. |

In modern gasification processes, all substances are mixed in a transporting flow and undergoes fast temperature rise through partial combustion. The majority of the organic substance is evaporated during this step. Valuable molecules of average length are decomposed into short and often less valuable molecules. The contact with the char will, at the same time, imply that a process occurs where molecules of average length is polymerized catalytically to long, less valuable molecules. The possibilities to extract the initially formed hydrocarbons are therefore limited.

Looking at the historical processes, it was especially the tar pile that utilized the favorable characteristics of the raw material and produced a coveted product in the form of tar that can be used as rot-proofing agent. This was achieved by strictly electing the raw material, carefully drying it and slowly heat-treating the material, making it possible to separate the formed liquid and protect it from continued thermal influence, using the methods and techniques possible at that time. The possibilities to regulate the flow and the progress in the device were very limited.

The roasting is performed in laboratory scale by using ovens where the heat is transmitted to the material through natural convection in the oven. This is considered to give a great uncertainty in the performance since the time/temperature ratio in the material is unclear. An alternative solution is provided in worm conveyor with heating jackets. However, these are difficult to scale up from a pilot scale. Various rotary kilns are therefore tested, where the rotary kilns can either be heated directly or indirectly. Also fluidize beds of vibratory grate type with vertically gas flowing through it can be used. A modern form of wet carbonization wherein the material is treated with vapour under pressure in an autoclave has also been described.

The drying of the raw material is a neglected area in the modern technique, unlike the historical techniques where it was realized that if the raw material is to be used as fuel for drying, the yield of the valuable product will be lower. The drying is considered a necessary but uninteresting part of the system by scientists and process developers today. However, measured as heating effect the drying is the dominant process, shown by the following example. To treat 1 kg/s of raw material from wood with a moisture content of 55%, approx. 1200 kW heat is needed to warm the goods to 100°C and evaporate the water. For the heating performed thereafter of the dry material up to 250°C for roasting, there is only a need for approx. 100 kW, provided that the reaction heat is negligible. Heating the residue up to 600°C only requires approx. 100 kW, provided that the reaction heat is negligible. This information shows that the drying is a very important part of the present heat treating processes, even if the temperature levels suggest otherwise. WO-A-2007/078100 describes a process for treating biomass, wherein the torrefaction reactor comprises a drying chamber and a torrefying chamber.

### Definitions

The definitions of torrefaction and pyrolysis established today are somewhat unclear. In the present application, the following words and terms have the following meanings:
Material means solid material, mainly organic material either:
1. Originating from the flora, usually named biomass:
   - herbaceous = grass and other agricultural products
   - ligno cellulosic = biomass from trees and bushes
   - other raw material of converted biomass such as peat, manure and municipal sludge;
   or
2. Originating from fossil:
   - organical waste, such as for example plastics, rubber and oil waste.

Both the raw material and solid material under treatment and completed products are named material herein.

Fixed bed means a bed of particles with non or small internal movements.

Drying means heat treatment with temperature lower than approx. 170°C. Water, light hydrocarbons, terpenes and carbon monoxide are gasified, but the solid substance is on the whole unaffected, except for certain physical shrinkage.

Pyrolysis means decomposition through influence of heat in an, with regard to combustion, inert atmosphere.

Torrefacation, roasting or mild pyrolysis means heat treatment in the temperature interval of 200 - approx. 260 °C in oxygen deficient environment. Especially hemicellulose is decomposed while water, carbon monoxide, organic acids, ammonia and certain combustible substances are gasified. The physical characteristics of the material are thereby altered. The specific heat value of the materials increases due to the fact that gases with low specific energy content are leaving the material.

Wet carbonization means heat treatment of a wet raw material under pressure corresponding to roasting of dry material. The carboxyl- and hydroxyl groups will be expelled as carbon dioxide and water and results in that the hydrophilic properties decreases, which is utilized during the subsequent mechanical dewatering. Water vapour and carbon monoxide is emitted whereby the specific energy content in the residue increases.

Carbonization means heat treatment at temperatures above approx. 260°C in oxygen deficient environment. The dry wood substance is decomposed into liquid, gas and coal.

Liquefaction or solvolyses means that the material is transformed into liquid in addition to other products.

Tar means the liquid formed during pyrolysis of an organic material. For lignocellulose specifies especially:
A-tar (Stockholm tar) - non water-soluble tar;
B-tar (pyrolytic acid) - water-soluble tar.

Pitch means viscous polymerization product resulting from pyrolysis of organic material.

Bio oil is a commonly occurring, but improper denotation for liquid resulting from fast pyrolysis of lignocellulose. Gasification means that the material is converted to gas in addition to other products, generally through partial combustion.

Cocking means that the coal crystallizes to graphite at temperatures above 600-700°C. Then the density and strength of the coal increases and certain amounts of methane and hydrogen gas are formed.

Char or charcoal means coal produced through pyrolysis of lignocellulose.

Activation means that the vapour will react with the coal during contact with water vapour at temperatures above 600°C and form hydrogen gas and carbon monoxide, which in turn increases the diameter of the pores in the coal, originating from the structure of the plants, resulting in improved characteristics for adsorption.

### Object of the invention

The intention by the inventor is to refine the raw material into products that are better suited for distribution and easier to use than the raw material. The invention therefor refers to a method for thermal treatment of moist organic material, especially organic material containing biomass according to the claims, wherein the moist organic material is introduced into a drying chamber in which a drying gas is circulated between the organic material and a heat exchanger to transfer heat to the organic material, and wherein vapour formed during drying of the organic material is brought into contact with an absorbent to recover heat to maintain the drying process by reheating the circulating gas. The advantages according to the invention is obtained by first bringing the organic material into a roasting chamber and thereafter a carbonization chamber. The organic material is brought into the roasting chamber after drying in the drying chamber in which roasting chamber gas from the drying chamber is heated is forced through the material so that the temperature of the organic material is increased to about 250°C, whereby the organic material emits gases comprising essentially water, carbon oxides, organic acids, methanol and ammonia. After the roasting chamber, the organic material are introduced into a carbonization chamber in which the temperature of the organic material is further increased, at least to a temperature of about 350-450°C, by means of a heated gas under forced convection and wherein the gas mainly consists of steam from the drying chamber.

A further object of the invention is a method as has been described above wherein the organic material is maintained in the roasting chamber during a limited period of time of 10-200 min.

A further object of the invention is a method as has been described above wherein the organic material is maintained in a solid bed through which the heated gas is forced to pass.

Another object of the invention is a method as has been described above wherein liquid formed from the organic material is drained off out of the organic material in the solid bed to be collected. The liquid can for example be collected as tar, wherein the collected tar preferably is collected in different fractions.

Yet another object of the invention is a method as has been described above, wherein the organic material after the initial heating in the carbonization chamber to a temperature of at least 350-450°C is heated further to a higher temperature for a final carbonization of the organic material. The initial heating can further be performed in separate zones of the carbonization chamber, wherein the heated gas has different temperatures in the separate zones.

A further object of the invention is a method as has been described above wherein the components of the gases emitted from the organic material in the roasting chamber and/or the carbonization chamber are selectively absorbed in polar and non-polar solvents.

Another object of the invention is a method as has been described above, wherein carbonized organic material after the carbonization chamber is introduced into a cooling chamber in which the carbonized material is allowed to cool by means of a forced circulation of a cooling gas. The cooling gas can be a part of the drying gas from the drying chamber. Air with a reduced content of oxygen is introduced later in order to burn hot spots in the material before the final cooling is brought about with the incoming air that is later used in the combustion chamber.

### Detailed description of the invention

In the following, the invention will be described in detail, with reference to exemplifying embodiments of the invention and to the enclosed drawings in which:

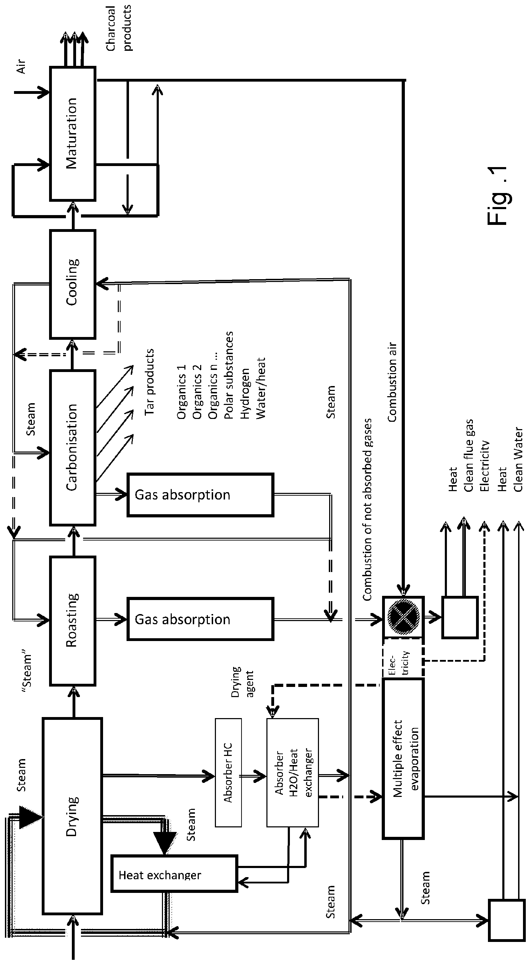

Fig. 1 shows an overview of the process, when a horizontal transporting contact apparatus of belt type is used, but also other types of known apparatuses is included in the invention. Characteristic is that water vapor from the drying step is used as a medium for transport of heat, formed gas and to support the transport of formed liquid.

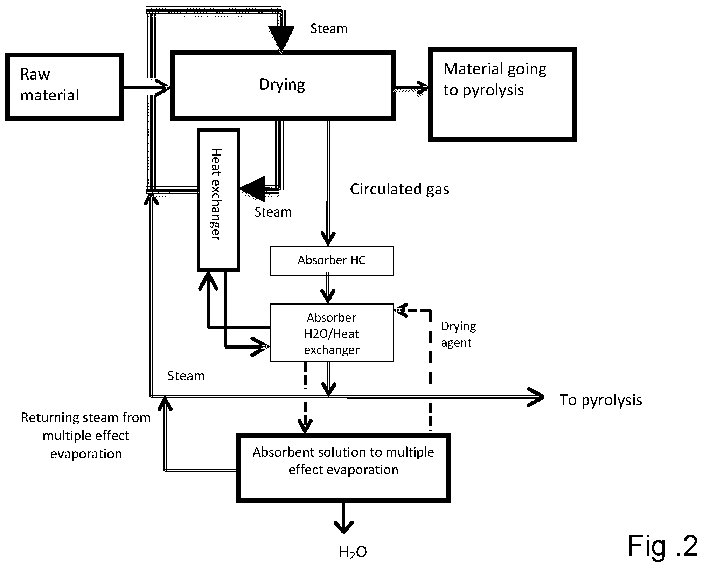

Fig. 2 shows a more detailed view of the drying process.

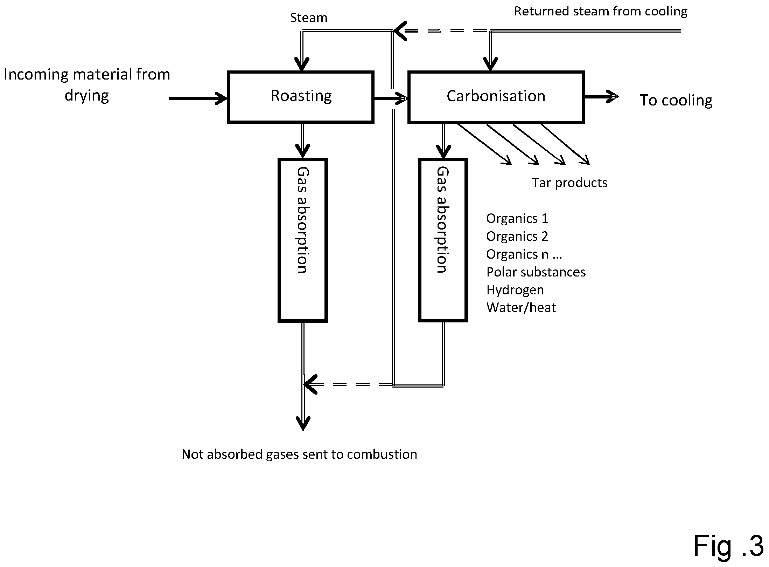

Fig. 3 shows a more detailed view of the pyrolysis process.

The invention refers to treatment of the material in several steps with gradually rising temperature and thereafter cooling and maturation of the coal. Gases produced in the process are treated so that different components are absorbed from the gas streams during a mild and controlled cooling instead of cooling to a cumulated condensate. The heat treatment of the material, the pyrolysis, is integrated with the method of drying, mentioned earlier.

### Raw material

The raw material is chosen with regard to the availability of the raw material and the desired products, as well as their marketing possibilities. There is a wide spectra of requirements to be provided for but also many bonds in the system raw material - product. The requirements on the size of the coal pieces can for example be such that the raw material must be fed in relatively large pieces. In these cases, the needs for dwell time will increase in the different moments, compared to the cases mentioned below.

### Heating of incoming raw material

The cold raw material is heated by condensing vapor on its surface. The dryer must therefore be fed with a certain amount of vapor to achieve and retain the intended working temperature.

### Drying

The raw material is dried according to what has been described in the Swedish patent no. 535846, wherein a system is described were a moist solid material is dried in inert atmosphere, dominated by water vapor. The drier is closed towards the surroundings and vapor is circulated in the dryer as heat carrier. When the material has dried a temperature raise guaranteeing dryness is performed and facilitates the further treatment without risks for overheating, fire etc.

During the drying, water vapor as well as carbon monoxide, organic acids and volatile hydrocarbons, mostly terpenes, evaporate. The working temperature is chosen so that the gas contains such a large amount of water vapor in order to suppress combustion to desired extent. A preferred working temperature is a wet temperature of 80-100°C on the material and the circulating gas is heated to approx. 150°C. The temperature in the dried stuff is suitably kept at a temperature of 80-100°C when the process is performed at, or close to, atmospheric pressure. The water vapour thereby always constitutes more than half of the volume of the gas.

One part of the circulated gas is contacted with a hygroscopic absorbent in a contact apparatus/absorber, where moisture is extracted and heat recovered. Various polar substances are absorbed by the absorption solution, besides water, for example the organic acids emitted from the raw material. Correspondingly, also non-polar substances are absorbed, for example hydrocarbons such as terpenes from the raw material by contact with a non-polar solvent, such as an oil. The remaining gases are led to combustion where the combustible gas is utilized to partly run the system and simultaneously destruct harmful substances. The diluted hydrophilic absorbent solution is evaporated in a heat efficient way making the system all in all very energy efficient and at the same time eliminating emissions to the atmosphere. The main part of the formed vapor is condensed during the evaporation and leaves the system in liquid form. A smaller part is brought back to the drying process as vapor where it in the first place constitutes an inert carrier gas and subsequently constitutes a heating carrier to heat the incoming material by direct condensation on the material.

### Drying gas

The circulating gas in the dryer consists of especially water vapor and volatile hydrocarbons, but also of not condensable gases from the material (e.g. carbon monoxide, some carbon dioxide and hydrogen gas) or from the surroundings (nitrogen or traces of oxygen). A considerable gas flow is circulated between a heat exchanger and the dried stuff to transfer heat to the dried stuff. The main part of the vapor formed during drying is absorbed in a substantially hygroscopic liquid so that heat can be recovered to retain the drying process by recovering the circulating gas. The hygroscopic potential of the liquid ensures that the absorption take place at an elevated temperature so that recovered heat is capable of heating the gas. The net flow of water leaves the dryer bound in the absorption liquid.

If hydrocarbons are to be recovered during drying, this can be done by absorption in a non-polar solvent (e.g. oil from vegetable or fossil origin) separately or in the same apparatus as the absorption of water. The main part of the residual gas is returned to the dryer and a part of it is used as carrier gas during pyrolysis or led to combustion. The heat capacity of the moist material is an assurance for keeping the vapor dominated inert atmosphere even during short operations disturbances, even though the mass and heat capacity of the gas is small. Accumulation of inert and combustible gases in the dryer is prevented by leading a small gas stream via the pyrolysis unit and finally via gas cleaning and combustion to the atmosphere.

### Pyrolysis of the material

Pyrolysis is performed in one or two steps. By using a two-step pyrolysis process (roasting + carbonization) it is possible to make sure that the first reaction is finalized before the second reaction starts. The pyrolysis process begins with roasting to increase the quality of the material before the subsequent carbonization. Since the drying process is very energy efficient, the energy in formed gases will exceed the heat demand. The aim for the processes is therefore to increase the yield of liquid and char and to minimize the formation of combustible gases.

By integrating pyrolysis of the raw material in a system for efficient drying of it, it is possible to achieve several advantages. The pyrolysis is performed in an atmosphere with low oxygen content. The vapor in the drying system constitutes an excellent heating carrier even at pyrolysis at the same time as it is an inert during combustion. The mass of warm and moist dry material in the dryer constitutes a buffer that rapidly can compensate for loss of vapor due to interruptions, etc.

### Roasting of the material

The fluids formed during the heat treatment according to known methods have a far too high content of oxygen to constitute adequate fuels or appropriate raw material for production of vehicle fuel. These properties are improved in the present invention by conducting roasting of the material to reduce the oxygen content in the raw material before the liquid forming treatment at higher temperature is initiated.

The dried material is roasted during a certain time (10- 200 min.) at a temperature of approx. 250°C so that the intended pre-treatment occurs. The oxygen content in the material is reduced by the roasting through decarboxylation and dehydrox-ylation, etc. Oxygen containing gases with a low thermal value, such as water and carbon dioxide, evaporates and the thermal value of the remaining material is thereby increased at the same time as the content of oxygen decreases. Furthermore organic acids, ammonia, etc. are evaporated. If carbonization is initiated during the roasting control over the process will be lost as well as the intended pretreatment. By performing heating with forced convection is it possible to control the maximal heating temperature carefully. By performing the process in a fixed bed with defined flow direction of the gas, it is possible to prevent that a possible carbonization reaction is spread to the material up-stream.

US 4,552,978 states that "in the possible subsequent carbonization of the torrefied wood of the invention, the high value of the fixed carbon, explained by the condensation of the hemicelluloses, leads to yields of charcoal higher than 35%, which figure is impossible to attain by direct carbonization of wood. The pyro ligneous substances obtained contain fewer acids and fewer heavy products. They are broken up more easily". The inventors of the US-patent application have thus thought about this but aiming at a higher char yield. In the present application the aim is an improved quality of the liquid thus formed.

### Roasting process

The dried material is roasted by heating to the level of approx. 250°C during 10-200 min. The heat is added by heated water vapour from the carbonization stage or vapor that has been used as a cooling media for readily treated material. The gas is heated to a desired temperature and is thereafter led through the material to be treated. Temperature control in this step is critical to make sure that the auto thermal carbonisation reaction is not activated. The final heating of the gas can be made indirectly with a heat exchanger, directly with an electrical heater or in situ by adding a controlled amount of oxygen/air to the part of the gas where a controlled combustion will occur.

### Gas from roasting

During heating the material will emit firstly water vapor and carbon monoxide and organic acids, methanol and furthermore a certain amount of ammonia, carbon monoxide and lighter hydrocarbons, but also heavier hydrocarbons such as furfural. The stream of gas also contains the gases that has leaked in to the process or has been set free during the drying and not been absorbed in connection to the drying process. Gases not absorbed during the gas treatment are burned for destruction and energy recovery so that firstly carbon oxides and nitrogen gas can leave the system.

The gas from the roasting section can be utilized by selective absorption of components in the gas followed by combustion of remaining components. Alternatively, the entire gas flow is burned, for example if there is enough demand for heat. If it is desirable to extract the organic substances from the gas, they can be absorbed by a non-polar solvent (oil of vegetabilic or fossil origin). The process is performed without cooling or with only mild cooling to a temperature above the saturation temperature for water. The water and the hydrophilic substances will thereby stay mainly in the gaseous phase. The absorption will give rise to an oil firstly containing non-polar hydrocarbons. Impurities of other character, but with a low steam pressure such as waxes will condensate and possibly form a separate phase. If one wishes to separate aliphatic and aromatic hydrocarbons, aliphatic oil can be used in one step and aromatic oil in another absorption step.

Water soluble hydrophilic compounds are thereafter absorbed by means of absorption in a smaller water flux. The process is somewhat cooled and performed at the saturation temperature for the water so that the water vapor in the gas mainly stays in gaseous phase. The absorption flow of liquid water can be added from outside or created from partial condensation. The process gives rise to an acidic water solution consisting mainly of organic acids, methanol, aldehydes and the amount of ammonia formed as well as traces of other organic substances. The water soluble compounds can be separated with known methods to marketable products such as ammonia, half organic salts, etc., for example in ways that has been described in US 7942942. Hydrogen can be separated by any known method and utilized for example in a hydrogenation process.

The gas which thereafter mainly contains water vapor and carbon monoxide, carbon dioxide, methane, ethane and some hydrogen gas can be led to a unit for absorption of water and simultaneous production of heat to the internal processes (a parallel function to the absorption in the drying part) and possibly also for external delivery of heat

The residual gas is a combustible gas with a relatively low specific thermal value and is led to combustion for energy recovery and destruction. The generated heat is used to operate the evaporation of dehydrant, possibly with simultaneous production of electricity and heat using any known technique.

### Carbonization of the material

When the material is roasted during the intended time, it has an even temperature of approx. 250°C. By adding a warmer gas (400-1200°C) in a similar way as during the roasting, the auto thermal carbonization reaction will be initiated. A reaction "front" will move through the bed in the direction of the gas stream. Gas and liquid are formed in the front and a bed of residual material with high char content is left up-stream. According to the invention, the material is in a fixed bed heated with a warm gas that is added through forced convection in a direction that facilitates transport of formed gas and liquid away from the reaction zone, at the same time as the material is left in the bed while as few particles as possible follow the gas and the liquid. The apparatus is provided with appropriate devices, known in the art, to achieve this. The material is characterized in that it initially, during the carbonization process, is heated to a temperature giving a high yield of fluid (350-450°C) and thereafter to a higher temperature to give the char its desired properties. The carbonization process can advantageously be divided into separate zones where the gases are given different temperatures.

The roasted material is carbonized and finally treated by heating in a stationary bed to a temperature in the interval of 450-1200°C. The temperature and time is chosen with regard to the desired quality of the char, but also the proportion of hydrogen in the gas to affect the process down streams. The heat is added by final heating of water vapor from the drying section, that has been used as cooling media for final treated material, to a desired temperature using any of the methods described for roasting and is thereafter led through the material to be treated.

The added water vapor forms hydrogen gas when it comes into contact with the formed char, provided that the temperature is high enough. This known reaction is called the water-gas shift reaction, displaced towards higher hydrogen content between 600 and 1000°C. The hydrogen gas is intended to contribute to a more advantageous composition for the downstream formed liquefied products by removal of oxygen through the formation of water vapour and to higher hydrogen content in the products. These reactions can be catalysed through natural or added trace elements or substances in the raw material.

### Gas from carbonisation

The gas is added so that the streaming of the gas is contributing to transport of formed gas and liquid away from the hot zone, e.g. vertical downwards or horizontally. The gas from the carbonisation is similar to the roasting gas, but it contains a higher content of hydrocarbons and more complex hydrocarbons as well as a lower content of acids, ammonia, etc. The gas is therefore treated in a similar way with regard to the components desired to obtain. The rest of the gas is utilized as heat carrier in the roasting stage or is led to combustion in the same way as has been described for the roasting gas. The content of hydrogen gas in the gas can be controlled by the choice of temperature for the heat treatment of the coal where water vapor and coal is converted to hydrogen gas and carbon monoxide. A higher content of hydrogen will, as has been mentioned before, give better properties also for the residual gas for several applications.

As mentioned above, an increased content of hydrogen gas also gives additional field of applications for the residual gas resulting after absorption of the other compounds, by acquiring better properties during application of various techniques such as combustion in a burner, gas engine, gas turbine or fuel cells. Hydrogen gas can also be separated before combustion by any known technique, for instance to be used for hydrogenation of products.

### Assembling formed liquid, tar

It is characteristic for the invention that the liquid formed drains from the original substance. The drainage is performed in such a way to cool down the liquid to the roasting temperature at the passage through not reacted bed material and then to be collected downstream of the bed. The liquid is divided into different fractions with reference to raw material, time, temperature, etc. Initially formed liquid from an appropriate pine raw material constitutes a modern analogue to the historical tar from a tar kiln (so called "dalbrand" tar, or "toret-jara"), existing of resin and fatty acids and their conversion products such as resin oil, oxy acids and esters, higher fat and terpene alcohols, stearine, etc., which distinguishes a wood tar of good quality according to traditional conceptions. The fractions that thereafter drains have other fields of applications such as for example fuel in stationary plants or as raw material for further refinement. The products can be modified by adding some of the components separated in the gaseous treatment and the therein used chemical agents.

Several of the molecules formed during the carbonisation tend to polymerize and form lower and less valuable or harmful molecules, such as pitch. The polymerization is accelerated by high temperature and the presence of catalysing agents, e.g. coal. This is limited according to the invention by handling the material in a fixed bed where heat is added so that a heat front is formed by the flowing of hot inert gas through the bed during simultaneous heating of the bed. The gas is added with such a direction and a velocity that:
- it does not counteract gravity for transport of formed fluid;
- convection forces from the heating of the bed etc. does not change the main flow direction of the gas;
- the friction of the gas during passage through the material contributes to transporting the formed fluid away from the heat zone towards the colder material down streams of the heating front;
- the solid substance is not put into such a movement that can generate fine particles or transfer carbon particles to the liquid formed;
- carbon particles in the liquid is captured at the passage through the roasted material.

Liquid and gas is released from the solid substance during the carbonization process. Substances with considerable partial pressure can be in each of the three states of aggregation. The liquid formed drains from the solid material and flows with help of gravity and friction from the gas away from the heat front so that it is cooled to roasting temperature relatively fast. At the cooling during this transport, gas will be condensed/dissolved in the liquid which contributes to maintaining a low viscosity which in turn accelerates the drainage. A wearing surface or any other device with the ability to retain the coal particles is placed in the lower part of the bed. It is important that the solid material (the coal) does not follow the liquid in any larger extent since the coal deteriorates the quality of the liquid. The tar products are separated into different fractions with regard to raw material, time, temperature, etc.

Accordingly, the fluid formed is flowing through roasted colder material until it leaves the bed. The substances that have a substantial partial pressure are carried by the gas stream away from the heating zone and cooled down correspondingly downstream of the heating front. This means that a front of condensate of substances with limited volatility will be moved in the same direction as the gas. The volatile substances will be partly dissolved by the fluid downstream, resulting in that the viscosity of the fluid is reduced and the output of the fluid and the condensed substances is accelerated. The material normally contains certain amounts of substances with the ability to catalyze the desired reactions, e.g. hydration. Similarly, many plant materials contain anti-oxidants with the ability to slow down oxidation of reactive compounds in the fluid forming pitch. It is also possible to add such substances to influence the processes.

The carbonisation can continue during a short or a long time depending on the char quality to be achieved. In the same way it is also possible to let the high temperature penetrate different depth of the coal bed.

### Cooling, maturity and output of the char

The char is cooled by that the gas stream dominated by water vapour from the dryer, with a temperature of between 80 and 100°C is led through the coal bed. The high temperature heat in the coal is absorbed by the gas, which is added to the various pyrolysis steps after final heating.

The char has a very large inner surface that never has been in contact with the oxygen in the atmosphere. The initial cooling is therefore followed by continued cooling in a controlled atmosphere by circulated air that cools the reaction heat at the same time as the controlled oxygen content limits the combustion to so called hot-spots in the material. This process can take varying amounts of time, depending principally on the raw material. The time consumption can be several hours.

### Cooling

The char product is cooled before it leaves the inert atmosphere, by leading water vapor from the dryer through the material. High temperature heat will thus be recovered directly into the process.

### Maturing

To reduce the risk of self-ignition after the treatment it is possible to burn reactive surfaces (hot spots) in the material during the continuous process by adding a smaller amount of oxygen (air) to the cooling gas. The cooling gas, with limited oxygen content, is circulated through the material, ensuring that actual burning temperatures are avoided. This process can take a long time (from hours up to several days) depending on the characteristics of the raw material and the final temperature of the carbonization. The exhaust gas from maturation is best led to the combustion since it contains both heat some combustible gas and oxygen.

The char product leaving the bed can have different properties in different layers of the material bed. The different layers can have properties that should be utilized by dividing the bed into different fractions when the material leaves the process. Generally, more volatile substances will be moved downstream in the material during the intensive heating. Heavier hydrocarbons will be moved downstream. Substances having a particular partial pressure will leave the hot parts and concentrate in the colder parts. Such substances are alkali metals and halogenides and some trace elements. Furthermore, the layer that has been treated at the highest temperature may have undergone so called activation, which facilitates special field of applications as active coal.

### Char product

The coal product is separated into possibly one or more categories, such as char depleted and enriched in alkali etc. or saturated carbon, depending on in which horizon of the bed that has been treated (i.e. which temperature that has been reached).

### Selective absorption of gases

Recovery of components from the gas can be made before the gas is burned for destruction and energy recovery. The two gas streams from the pyrolysis are treated separately or in common in a way similar to the drying, so that the different components in the gas can be separated from the gas during selective absorption instead of condensation. Condensation results in a "bio oil" that is very hard to treat, although this is the commonly used process in both older and more modern systems. Several potential difficult emissions are transformed during the absorption to a resource effective recovery of interesting substances such as turpentine, aromatics, aliphatics, methanol, ammonia, organic acids, ketones, half organic salts (antifreeze agent) etc. An important function is to separate polar organic compounds (water soluble) from the non-polar (oil), since these have different applications of use. The non-polar compounds can also be separated in aliphatic and aromatic compounds by choosing appropriate solvents during the absorption. The organic acids, principally acetic acid and formic acid, constitute a group that is able to give severe corrosion in the plant. Ammonia is a compound with high demands especially for cultivation of plants. The alternative, to burn the ammonia, is very disadvantageous since the nitrogen contributes to the formation of nitric oxide emissions.

### Energy balance

The process is aimed to create relatively small amounts of gas as this energy usually is difficult to utilize. The heat losses from the system are low. However the system will normally give a heat surplus due to the efficient drying system. The heat from combustion of residual gas for internal heating purposes can give a low utilization if there is no heat demand. If electricity is produced using the gas, a part of the energy will be refined to electricity and distributed to other users willing of paying and the residual heat can be used in the system. Appropriate power processes in this scale can for example be piston engines, gas turbines and fuel cells, but are not limited to these examples. A certain content of hydrogen gas in the fuel is favorable in application of these techniques.

### Regeneration of hygroscopic liquid

Water and heat is recovered from the drying step by absorbing the gas in a hygroscopic liquid. The liquid must be regenerated after this dilution. Regeneration is performed by evaporation using any known technique. Multiple effect evaporation is especially favorable. Every evaporation effect produces a water condensate that thereafter leaves the system. It is however mentioned in SE 535846 that also vapour from the evaporator is led back to the drying step to compensate for the loss of vapour due to the introduction of cold raw material. The vapour used during the heating treatment is produced both in the dryer and in the regeneration. Any possible excess is condensed in a heat exchanger for external heat delivery.

Above, an exemplifying preferred embodiment of the method has been described.

However, it is realized that the invention can be varied in different respects without departing from the basic idea of the invention.

The method, as described herein, is intended to be used to refine raw materials into products that are better suited for distribution and easier to use than the raw material. Nonlimiting examples of such products is char that can be used as fuel or as reduction agents in different processes, active coal that can be used as adsorption agent and tar products that can be used in rot-proofing agents or fuels for stationary or mobile operations.

Hence, the invention is not to be considered limited to the above described embodiments, but may be varied within the scope of the enclosed claims.

## Claims

1. Method for thermal treatment of moist organic material, especially organic material containing biomass, wherein the moist organic material is introduced into a drying chamber in which a drying gas is circulated between the organic material and a heat exchanger to transfer heat to the organic material, and wherein vapor formed during drying of the organic material is brought into contact with an absorbent to recover heat to maintain the drying process by reheating the circulating gas in a heat exchanger, wherein, after drying in the drying chamber, the organic material is brought into a roasting chamber in which gas originally from the drying chamber is heated and forced through the material so that the temperature of the organic material is increased to about 250°C, whereby the organic material emits gases comprising essentially water, carbon monoxide, organic acids, methanol and ammonia,
**characterized in that** the organic material after the roasting chamber are introduced into a carbonization chamber in which the temperature of the organic material is further increased, initially to a temperature of about 350 - 450°C, by means of a heated gas under forced convection, wherein the gas consists mainly of steam originally from the drying chamber.

2. Method according to claim 1, wherein the organic material is maintained in the roasting chamber during a limited period of time of 10-200 min.

3. Method according to claim 1 or 2, wherein the organic material is maintained in a solid bed through which the heated gas is forced to pass.

4. Method according to claim 3, wherein liquid formed from the organic material is drained off out of the organic material in the solid bed to be collected.

5. Method according to any of the preceding claims, wherein the organic material after the initial heating in the carbonization chamber to a temperature of at least 350 - 450°C is heated further to a higher temperature for a final carbonization of the organic material.

6. Method according to claim 5, wherein the initial heating and the further heating is performed in separate zones of the carbonization chamber, and wherein the heated gas has different temperatures in the separate zones.

7. Method according to any one of the preceding claims, wherein components of the gases emitted from the organic material in the roasting chamber and/or the carbonization chamber are selectively absorbed in polar and non-polar solvents.

8. Method according to any one of the preceding claims, wherein carbonized organic material after the carbonization chamber is introduced into a cooling chamber in which the carbonized material is allowed to cool by means of a forced circulation of a cooling gas.

9. Method according to claim 8, wherein the cooling gas is a part of the drying gas from the drying chamber with a small addition of air in order to burn hot spots in the material.

10. Method according to claim 4, wherein the liquid content being collected is tar.

11. Method according to claim 10, wherein the collected tar is being separated into different fractions.

## Patentansprüche

1. Verfahren zur thermischen Behandlung von feuchtem organischem Material, insbesondere von Biomasse enthaltendem organischem Material, bei dem das feuchte organische Material in eine Trocknungskammer eingebracht wird, in der ein Trocknungsgas zwischen dem organischen Material und einem Wärmetauscher zirkuliert, um Wärme auf das organische Material zu übertragen, und bei dem während des Trocknens des organischen Materials gebildeter Dampf mit einem Absorptionsmittel in Kontakt gebracht wird, um Wärme zurückzugewinnen, um den Trocknungsprozess durch Wiedererwärmen des zirkulierenden Gases in einem Wärmetauscher aufrechtzuerhalten, wobei das organische Material nach dem Trocknen in der Trocknungskammer in eine Röstkammer gebracht wird, in der Gas, das ursprünglich aus der Trocknungskammer stammt, erhitzt und durch das Material gepresst wird, so dass die Temperatur des organischen Materials auf etwa 250°C erhöht wird, wodurch das organische Material Gase abgibt, die im Wesentlichen Wasser, Kohlenstoffmonoxid, organische Säuren, Methanol und Ammoniak umfassen,
**dadurch gekennzeichnet, dass** das organische Material nach der Röstkammer in eine Karbonisierungskammer eingeführt wird, in der die Temperatur des organischen Materials mittels eines erhitzten Gases unter erzwungener Konvektion weiter erhöht wird, zunächst auf eine Temperatur von etwa 350 - 450°C, wobei das Gas hauptsächlich aus Dampf besteht, der ursprünglich aus der Trocknungskammer stammt.

2. Verfahren nach Anspruch 1, wobei das organische Material während einer begrenzten Zeitspanne von 10-200 Minuten in der Röstkammer gehalten wird.

3. Verfahren nach Anspruch 1 oder 2, bei dem das organische Material in einem Festbett gehalten wird, durch das das erhitzte Gas zwangsweise geleitet wird.

4. Verfahren nach Anspruch 3, wobei aus dem organischen Material gebildete Flüssigkeit aus dem zu sammelnden organischen Material im Festbett abgeleitet wird.

5. Verfahren nach einem der vorhergehenden Ansprüche, wobei das organische Material nach dem anfänglichen Erhitzen in der Karbonisierungskammer auf eine Temperatur von mindestens 350 - 450°C für eine endgültige Karbonisierung des organischen Materials weiter auf eine höhere Temperatur erhitzt wird.

6. Verfahren nach Anspruch 5, wobei das anfängliche Erhitzen und das weitere Erhitzen in getrennten Zonen der Karbonisierungskammer durchgeführt werden und wobei das erhitzte Gas in den getrennten Zonen unterschiedliche Temperaturen aufweist.

7. Verfahren nach einem der vorhergehenden Ansprüche, wobei Komponenten der aus dem organischen Material in der Röstkammer und/oder der Karbonisierungskammer emittierten Gase selektiv in polaren und unpolaren Lösungsmitteln absorbiert werden.

8. Verfahren nach einem der vorhergehenden Ansprüche, bei dem das verkohlte organische Material nach der Karbonisierungskammer in eine Kühlkammer eingeführt wird, in der das verkohlte Material durch eine erzwungene Zirkulation eines Kühlgases abkühlen kann.

9. Verfahren nach Anspruch 8, wobei das Kühlgas ein Teil des Trocknungsgases aus der Trocknungskammer mit einem geringen Zusatz von Luft ist, um heiße Stellen im Material zu verbrennen.

10. Verfahren nach Anspruch 4, wobei der gesammelte flüssige Bestandteil Teer ist.

11. Verfahren nach Anspruch 10, wobei der gesammelte Teer in verschiedene Fraktionen getrennt wird.

## Revendications

1. Procédé pour le traitement thermique de matières organiques humides, en particulier d'une biomasse contenant des matières organiques, dans lequel les matières organiques humides sont introduites dans une chambre de séchage dans laquelle un gaz de séchage circule entre les matières organiques et un échangeur de chaleur pour transférer de la chaleur aux matières organiques, et dans lequel la vapeur formée durant le séchage des matières organiques est portée en contact avec un absorbant destiné à récupérer de la chaleur pour maintenir le traitement de séchage par réchauffage du gaz en circulation dans un échangeur de chaleur, dans lequel, après le séchage dans la chambre de séchage, les matières organiques sont amenées dans une chambre de grillage dans laquelle du gaz provenant de la chambre de séchage est chauffé et forcé à travers les matières de façon que la température des matières organiques soit portée à environ 250°C, moyennant quoi les matières organiques émettent des gaz comprenant essentiellement de l'eau, du monoxyde de carbone, des acides organiques, du méthanol et de l'ammoniac,
**caractérisé en ce que** les matières organiques après la chambre de grillage sont introduites dans une chambre de carbonisation dans laquelle la température des matières organiques est encore augmentée, initialement à une température d'environ 350 à 450°C, au moyen d'un gaz chauffé sous convexion forcée, dans lequel le gaz est constitué principalement de vapeur provenant de la chambre de séchage.

2. Procédé selon la revendication 1, dans lequel les matières organiques sont maintenues dans la chambre de grillage durant une période de temps limitée, de 10 à 200 minutes.

3. Procédé selon la revendication 1 ou 2, dans lequel les matières organiques sont maintenues dans un lit solide à travers lequel le gaz chauffé est forcé de passer.

4. Procédé selon la revendication 3, dans lequel le liquide formé à partir des matières organiques est chassé par drainage des matières solides dans le lit solide à collecter.

5. Procédé selon l'une quelconque des revendications précédentes, dans lequel les matières organiques, après le chauffage initial dans la chambre de carbonisation à une température d'au moins 350 à 450°C, sont encore chauffées à une température plus élevée pour une carbonisation finale des matières organiques.

6. Procédé selon la revendication 5, dans lequel le chauffage initial et le chauffage ultérieur sont effectués dans des zones séparées de la chambre de carbonisation, et dans lequel le gaz chauffé a des températures différentes dans les zones séparées.

7. Procédé selon l'une quelconque des revendications précédentes, dans lequel des composants des gaz émis par les matières organiques dans la chambre de grillage et/ou la chambre de carbonisation sont sélectivement absorbés dans des solvants polaires et non polaires.

8. Procédé selon l'une quelconque des revendications précédentes, dans lequel les matières organiques carbonisées après la chambre de carbonisation sont introduites dans une chambre de refroidissement dans laquelle les matières carbonisées sont laissées à refroidir au moyen d'une circulation forcée d'un gaz de refroidissement.

9. Procédé selon la revendication 8, dans lequel le gaz de refroidissement est une partie du gaz de séchage provenant de la chambre de séchage avec une petite addition d'air afin que les points chauds dans les matières soient brûlés.

10. Procédé selon la revendication 4, dans lequel le contenu liquide collecté est du goudron.

11. Procédé selon la revendication 10, dans lequel le goudron collecté est séparé en différentes fractions.
